# EUROPEAN PATENT APPLICATION

(11) **EP 2 387 888 A1**
(43) Date of publication of application: **23.11.2011**
(21) Application number: 10425167.3
(22) Date of filing: 20.05.2010
(51) Int. Cl.: A21C 11/02, A21C 7/01, A21C 7/02

(54) **Shaping device for fresh pasta**

(71) Applicant: Zindo S.r.L., 70051 Barletta , BT (IT)
(72) Inventor: Zingrillo, Raffaele Ruggiero, 70051 Barletta, BA (IT)
(74) Representative: Papa, Elisabetta

(57) **Abstract**

A shaping tool (11) for use in a machine (1) for the production of fresh pasta in a desired format, which shaping tool (11) comprises:
- a plurality of recesses or concavities (12) set side-by-side, each of which shaped according to a profile substantially elongated and tapered and apt to be longitudinally traversed by a rolling dough bit in order to give the desired format thereto; and
- a knurled member (15), having a plurality of grooves (17) apt to produce corresponding lines (R) on each dough bit,

the overall arrangement being such that said shaping tool (11) is apt to output fresh pasta samples having an elongated and tapered convex central body (G) provided with the above-mentioned lines (R) (Fig. 6).

## Description

The present invention refers to a shaping tool and device for fresh pasta.

As it is known, once some types of fresh pasta such as, e.g., Apulian specialities known as *"orecchiette", "cavatelli"* and *"gnocchetto",* were exclusively handmade. Nowadays, with the enlargement of the markets and a growing demand for such typical products, pasta production is also carried out by artisanal and industrial systems. In particular, several types of machines are known which, starting from dough, can output fresh pasta types of the desired format and having good or very good organoleptic properties, as if they were handmade.

The machines at issue can perform continuous production cycles, even 24h ones, and therefore are perfectly suitable for industrial mass production.

Such machines typically include a hopper for charging dough or base ingredients, a set of augers for working and channelling the dough itself, and then a draw-plate associated to a knife tool that jointly reduce dough to bits, which are intended to make fresh pasta elements. In particular, after being cut, the dough bits - still shapeless or substantially cylindrical - arrive into a plurality of feeding channels of a shaping tool, which gives each bit the desired final format.

Such a machine is described, e.g. in the Italian Utility Model Appln. N° BA2002U000023 in the name of the same Applicant.

However, currently available shaping devices do not allow to reproduce, or to satisfactorily obtain some specific pasta formats.

Therefore, the technical problem set and solved by the present invention is to provide a shaping tool allowing to overcome the above mentioned drawbacks with reference to the known art.

Such a problem is solved by a shaping tool according to claim 1 and by an associated shaping device according to claim 5.

The preferred features of the present invention are set forth in the dependent claims thereof.

The present invention presents some relevant advantages. The main advantage lies in the fact that the tool and the shaping device of the invention allow to obtain a so-called *"csiga piccolo"* format, which will be described in detail below, in a mechanically simple way and with a very good reproduction of the desired configuration.

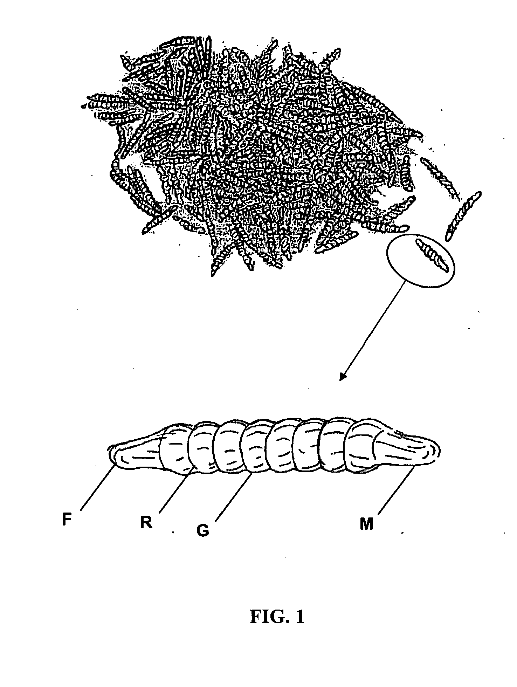

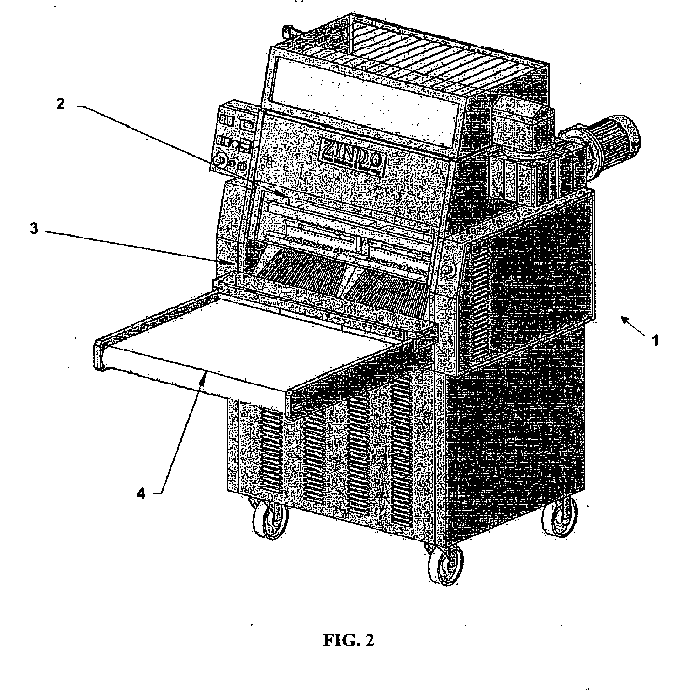

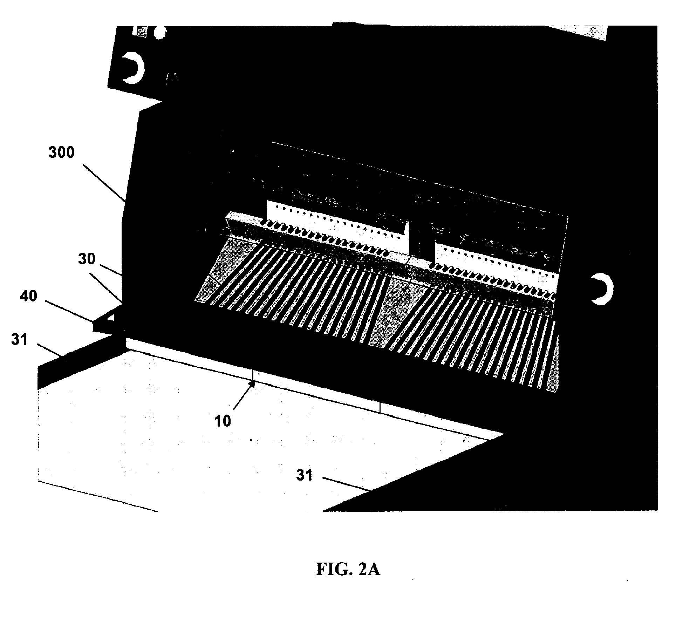

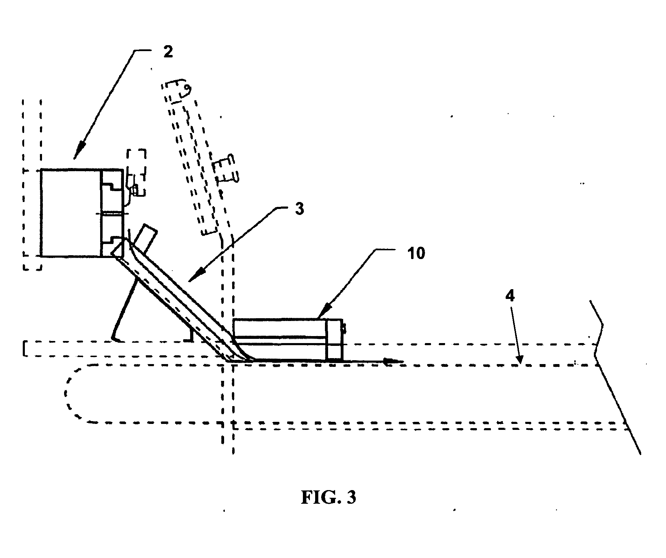

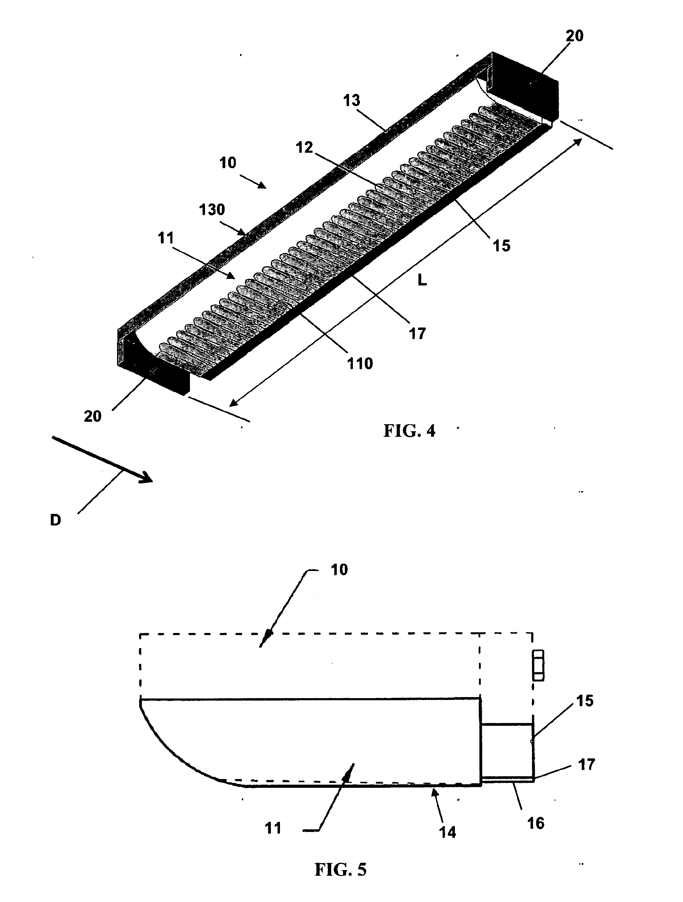

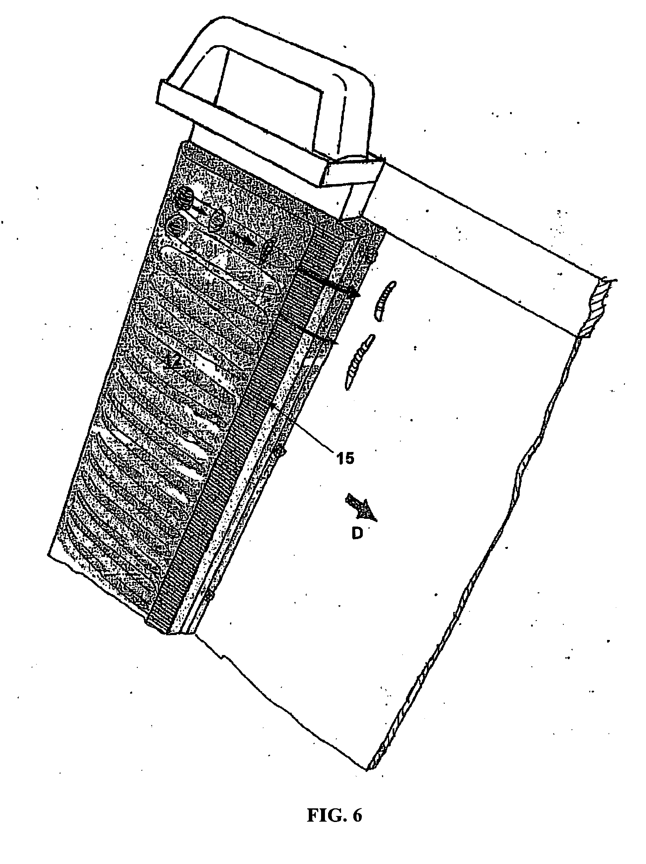

Other advantages, features and operation steps of the present invention will be made apparent in the following detailed description of some embodiments thereof, given by way of example and not for limitative purposes. Reference will be made to the figures of the annexed drawings, wherein:
■ Fig. 1 is a perspective view of some samples of a fresh pasta format referred to as *"csiga piccolo",* in which one of those samples is magnified;
■ Fig. 2 is a perspective view of a machine comprising a shaping device according to a preferred embodiment of the present invention;
■ Fig. 2A is a perspective view of an enlarged detail of the machine of Fig. 2;
■ Fig. 3 is a schematic side depiction of some components of the machine of Fig. 2;
■ Fig. 4 is a bottom perspective view of a shaping device according to a preferred embodiment of the present invention;
■ Fig. 5 is a schematic side view of the shaping device of Fig. 4; and
■ Fig. 6 is another bottom perspective view of the shaping device of Fig. 4, in which a fresh pasta bit is also depicted in its various positions and configurations during transit through the shaping device for obtaining the desired end configuration.

Referring initially to Fig. 1, the fresh pasta format obtainable with the tool and the shaping device according to the invention, will be firstly described.

As it is mentioned above, such a format is referred to as *"csiga piccolo".* As it can be appreciated in Fig. 1, each fresh pasta element of the aforementioned format has a substantially elongated and tapered shape, with longitudinal ends M and F being less thick with respect to a central body G. Moreover, at least on the central body G, grooves or lines R are made.

Referring now to Figs. 2, 2A and 3, a machine for the production of fresh pasta comprising a shaping device according to a preferred embodiment of the invention is generally referred to as 1.

Machine 1 comprises a pair of extruder blocks 2 that, according to modes known in the art and already mentioned in the introduction, produces fresh pasta bits to which a desired configuration is then given. Preferably, extruders 2 are of the type having a draw-plate with a bronze bar.

At the end of extruders 2, machine 1 then comprises a chute 3, typically a tilted plane, for feeding the dough (fresh pasta) bits to a conveyor 4.

Chute 3 preferably has a plurality of grooves or furrows 300, made substantially along the desired sliding direction and apt to guide the fresh pasta bits to the above-mentioned conveyor 4. In the present example, such guide grooves 300 have, on the sliding plane, a variable radial tilt from groove to groove, so as to induce a spacing of the dough bits sliding on the tilted plane 3.

In this example, conveyor 4 has a substantially horizontal development and is of carpet or chain-driven rotary conveyor belt type.

Therefore, the machine 1 is equipped with a shaping device 10 apt to impart to the dough bits a desired configuration, and specifically the so-called *"csiga piccolo"* configuration shown in Fig. 1.

Shaping device 10 is arranged in correspondence of conveyor 4, above thereto, preferably in an arrival region of the dough bits coming from chute 3, so that a shaping tool 11 of device 10, tool which will presently be introduced below, be facing on the conveyor itself.

Referring now to Figs. 4 to 6, shaping device 10 comprises the above-mentioned shaping tool 11 housed in a substantially C-shaped containment casing or support 130.

The shaping tool 11 comprises a plurality of recesses or shaped concavities, each referred to as 12 and having a substantially elongated and tapered shape. In particular, each concavity 12 is apt to receive a dough bit so as to give to the latter the corresponding convex shape of the central body G of the desired format.

The tapered configuration of each recess 12 entails a decreasing width thereof in the feed direction of the dough bits, that is to say the conveyor 4; said direction is shown with arrow D in Fig. 4.

Preferably, each shaped recess 12 is arranged in correspondence of a respective guide groove 300 of chute 3, almost as a continuation of the same groove.

Preferably, the shaped recesses 12 have lined walls and are made of a material suitable for fostering a rolling of the dough bits thereinside.

At the end of recess 12, shaping tool 11 comprises a knurled member 15 for giving to the dough bits the lines R.

The line-forming member 15 is drawn near and/or made integral to the shaping tool 11 and has, on a bottom face 16 thereof, a plurality of knurlings or lines 17, of a pitch and depth substantially lower with respect to the same parameters of the recesses 12 of the shaping tool 11. The function of this knurling 17 is to obtain lines R parallel thereamong, perpendicular with respect to an axis of rolling of the dough bits inside the recesses 12 and substantially parallel to feed direction D.

Shaping tool 11 is preferably made of plastic material and support 130 is apt to increase the overall stiffness of the device 10.

In particular, support 130 is equipped with a top wall 13 performing said stiffening function and two lateral sides 20 fostering a correct positioning and holding of device 10 on the machine 1. As an advantage, on one or both sides 20 a grip member is provided, e.g. a lateral handle 40, for easier positioning and/or removal from machine 1.

Transversal size L of shaping device 10 is such as to transversally cover the entire width of conveyor 4.

Therefore, as it is shown more evidently in Fig. 5, shaping device 10 is mounted on machine 1 in such a way that face 14 of shaping tool 11 equipped with concavities 12 faces on conveyor 4, at a distance predefined and preferably adjustable depending on the size, and in particular the thickness of the desired pasta format.

To the ends of such an adjustment, shaping device 10 may advantageously provide, as it is best seen in Fig. 2A, adjustment screws 30, housed into respective threaded through seats of wall 13 and resting on the corresponding side surfaces or edges 31 of machine 1.

Therefore, the overall arrangement is such that the fresh pasta bits, dragged by conveyor 4 in the space region comprised between the latter and the shaping tool 11, are shaped by recesses 12. As it is mentioned above, the configuration of the latter fosters the rolling and guiding of the dough bits, concomitantly shaping them according to an elongated and tapered shape. Ends F and M of each dough bit are thinned, as transiting into intermediate regions 110 interposed between adjacent recesses 12.

Then, knurled member 15 completes the required machining.

The described shaping device is particularly suitable for use on a machine according to Utility Model Appln. N° BA2002U000023 in the name of the same Applicant.

The present invention has been hereto described with reference to preferred embodiments thereof. It is understood that other embodiments might exist, all falling within the concept of the same invention, as defined by the protective scope of the claims hereinafter.

## Claims

1. A shaping tool (11) for use in a machine (1) for the production of fresh pasta in a desired format, which tool (11) comprises:
- a plurality of recesses or concavities (12) set side-by-side, each of which shaped according to a profile substantially elongated and tapered and apt to be longitudinally traversed by a rolling dough bit in order to give the desired format thereto; and
- a knurled member (15), having a plurality of grooves (17) apt to produce corresponding lines (R) on each dough bit,
the overall arrangement being such that said shaping tool (11) is apt to output fresh pasta samples having an elongated and tapered convex central body (G) provided with the above-mentioned lines (R).

2. The shaping tool (11) according to claim 1, wherein each of said shaped recesses (12) has a width decreasing in a longitudinal direction corresponding to the feed direction (D) of the dough bits.

3. The shaping tool (11) according to claim 1 or 2, which, at least in correspondence of said recesses (12), is made of a material suitable for fostering the rolling of the dough bits, preferably a plastic material.

4. The shaping tool (11) according to any one of the preceding claims, having intermediate regions (110) interposed between respective pairs of adjacent recesses (12) and apt to give a tapered configuration to the ends (M, F) of the dough bit.

5. A shaping device (10) comprising a shaping tool (11) according to any one of the preceding claims and a support (130) of the latter apt to allow association thereof with a machine (1) for the production of fresh pasta.

6. The shaping device (10) according to the preceding claim, wherein said support (130) has one or more grip members (40), preferably a pair of side handles.

7. The shaping device (10) according to claim 5 or 6, comprising means (30) for adjusting the distance of the recesses (12) of said tool (11) from a conveyor (4) for fresh pasta bits of the machine (1), said means preferably comprising one or more adjustment screws.

8. A machine for the production of fresh pasta (1), comprising a shaping tool (11) according to any one of the claims 1 to 4 or a shaping device (10) according to any one of the claims 5 to 7.

9. The machine (1) according to claim 8, comprising, upstream of said shaping tool (11), a feed chute (3) for feeding the dough bits to the tool (11) itself.

10. The machine (1) according to the preceding claim, wherein said feed chute (3) comprises a plurality of grooves or furrows (300) made substantially along a desired sliding direction.

11. The machine (1) according to the preceding claim, wherein said grooves (300) have, on the sliding plane, a variable radial tilt from groove to groove, so as to induce a spacing of the sliding dough bits.

12. The machine (1) according to claim 10 or 11, wherein each shaped recess (12) of said shaping tool (11) is arranged in correspondence of an end of a respective groove or furrow (300) of said chute (3).

13. The machine (1) according to any one of the claims 8 to 12, comprising a conveyor (4), preferably of belt type, apt to support the dough bits in the transit of the latter through the recesses (12) of said shaping tool (11), the overall arrangement being such that said recesses (12) be facing on a conveying surface of said conveyor (4).
